# EUROPEAN PATENT APPLICATION

(11) **EP 3 316 192 A1**
(43) Date of publication of application: **02.05.2018**
(21) Application number: 17197804.2
(22) Date of filing: 23.10.2017
(51) Int. Cl.: G06Q 10/04, G06Q 10/08

(54) **BARRELED LIQUEFIED PETROLEUM GAS DISTRIBUTION SYSTEM AND BARRELED LIQUEFIED PETROLEUM GAS DISTRIBUTION METHOD**

(30) Priority: 28.10.2016 TW 105134987
(71) Applicant: Q.Gas Co., Ltd., Taipei City (TW)
(72) Inventor: LIN, Fong-Chi, Taipei City (TW)
(74) Representative: Becker Kurig Straus

(57) **Abstract**

A barreled liquefied petroleum gas (LPG) distribution system has a system infrastructure with a vehicle dispatch device (30) communicatively connected to multiple consumer ends and multiple vehicle ends. The consumer ends and the vehicle ends are equipped with multiple first and second electronic devices (20). When one of the consumer ends orders barreled LPG, a corresponding first electronic device (10) is used to transmit an order message. The vehicle dispatch device (30) performs a scheduled order mode, an instant order mode or a self-pickup order mode according to the order message. By the self-pickup order mode, barreled LPG can be delivered to consumers at non-fixed premises. Different discounts are given to consumers for choosing the scheduled order mode or the self-pickup order mode. Meanwhile, free spots within a delivery schedule can be utilized for the instant order mode. Accordingly, distribution efficiency and consumer interaction can be enhanced.

## Description

### 1. Field of the Invention

The present invention relates to a distribution system and a distribution method therefor and, more particularly, to a barreled liquefied petroleum gas (LPG) distribution system and a barreled LPG distribution method therefor.

### 2. Description of the Related Art

Liquefied petroleum gas (LPG) or propane is commonly used as fuel and has a huge demand in the fuel market. However, the LPG market has escalated into an over-saturated market full of free competition. The management and distribution of current gas stores and those in the past vary slightly. Distinction about services provided by the gas stores is minor and the entry barrier to the business of gas stores is low. Most of the issues that the gas stores in the market encounter include labor intensive, storage of LPG barrel, inefficient distribution and the like. It should be stressed that there is no refund or discount for residual gas left in used LPG barrels when consumers return the LPG barrels to gas stores. As a result, consumers usually will not get the used LPG barrels replaced until the LPG barrels are completely used up, ending up with gas stores passively informed of request for barrels replacement from consumers. Once many requests for barrels replacement come in at the same time, gas stores need to arrange enough personnel to do the delivery job within a short period of time. On the other hand, in the case of no request from customers, all standby delivery personnel are idle there. Besides, regular customer premises for LPG includes stores and house owners in residential buildings or communities while it is inconvenient for non-residential customers with particular demands, such as outdoor barbeque, operation of agricultural machinery, to acquire LPG supply, making development of those particular demands less motivated.

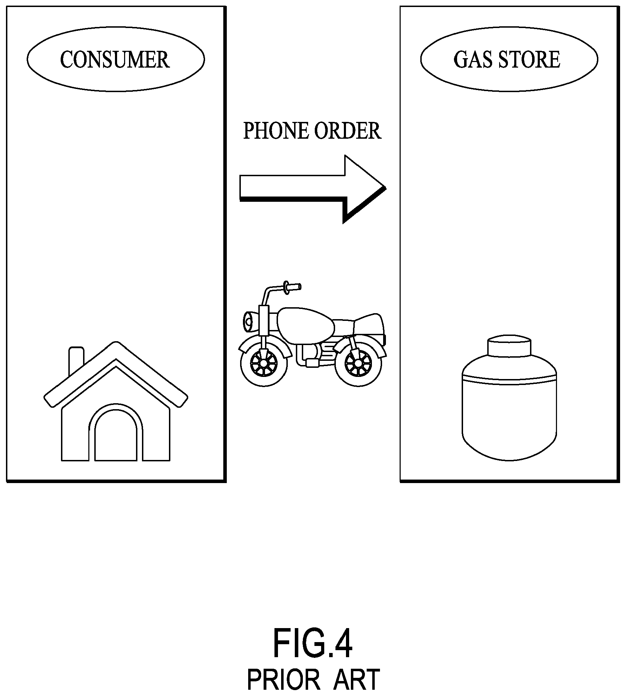

With reference to Fig. 4, conventionally, after a gas store receives a call from a customer for LPG barrel replacement, gas store delivers the LPG barrel to the premise of the customer to get the exhausted LPG barrel replaced. It may take longer time for a LPG barrel to be delivered to the premise of the customer through the conventional way. Additionally, gas stores must send the exhausted LPG barrels in hand to a cylinder refilling plant for refill and get the refilled cylinders back to the gas stores at off-peak hours in response to customers' demands at peak hours. As personnel of gas stores is mainly allocated during peak hours to serve customers, it is short-handed to dispatch LPG barrels to the cylinder refilling plant for refill at the moment, and the issue of inefficient distribution is therefore caused.

As disclosed in Taiwan Patent No. I403966, entitled "Dispatch platform and dispatch system for barreled liquefied petroleum" (hereinafter called conventional technique), multiple dispatch vehicles are used to send multiple LPG barrels to a client end and a dispatch platform is provided. The dispatch platform includes an executable procedure and a database for a user end to login and place order; and a platform manager who will proceed the dispatch operations according to the information displayed by the dispatch platform. The dispatch platform includes a login mechanism, a display mechanism, and a dispatch mechanism, and also includes a confirmation mechanism, a reply mechanism, and a content management system. When the clients login the dispatch platform through the external communication system and complete the operation of order placement, the dispatch platform will assign a dispatch vehicle running at the dispatch region according to a predetermined conditions to dispatch barreled LPG.

As can be seen from the conventional operation of gas stores which distributing LPG barrels, problems of personnel allocation waiting for passive notice for LPG barrel replacement, sudden dispatch, and idle personnel at the time of no request from customer exist. Although providing the dispatch platform for a client to login and place order and the dispatch platform can selectively assign a dispatch vehicle to dispatch barreled LPG to the client's premise through the login mechanism, the display mechanism, and the dispatch mechanism, the conventional technique fails to get away from the issues of personnel allocation waiting for passive notice for LPG barrel replacement and time-consuming delivery of LPG barrel, which leave unilateral delivery of LPG barrel to the premise and idle manpower unresolved. Moreover, the way of distribution associated with the conventional technique also has the difficulty of raising distribution efficiency.

An objective of the present invention is to provide a barreled liquefied petroleum gas (LPG) distribution system and method, which transceive information among a barreled LPG vendor, multiple consumer ends and multiple vehicle ends by virtue of network communication, generate an interactive ways of distribution according to consumers' demands through a vehicle dispatch device provided by the vendor, provide discounts to motivate consumers to change customers' habits for replacement of barreled LPG, and enhancing distribution efficiency of barreled LPG and consumer interaction.

To achieve the foregoing objective, the barreled LPG distribution method performed by a vehicle dispatch device is communicatively connected to multiple consumer ends and multiple vehicle ends through a network, and the barreled LPG distribution method includes:
receiving an order message from one of the multiple consumer ends and realtime schedule information from the multiple vehicle ends to generate per-ordered schedule information;
determining if an instant order mode, a scheduled order mode or a self-pickup order mode associated purchase of barreled LPG is to be performed;
when the instant order mode is to be performed, acquiring best-matching vehicle information according to the realtime schedule information, transmitting an instant delivery message, and recording transaction information of currently purchased barreled LPG including a unit price, purchase date and time, and cylinder specifications to complete the instant order mode;
when the scheduled order mode is to be performed, generating the pre-ordered schedule information according to a first discount condition, executing a planned delivery for scheduled order according to the pre-ordered schedule information, generating refund event information for LPG tare weight, and recording the transaction information of currently purchased barreled LPG;
when the self-pickup order mode is to be performed, generating the pre-ordered schedule information according to a second discount condition, executing a planned delivery for self-pickup order according to the pre-ordered schedule information, transmitting a self-pickup message, generating the refund event information for LPG tare weight, and recording the transaction information of currently purchased barreled LPG;
wherein the step of performing the scheduled order mode comprises:
   generating first pricing information and a first delivery time based on a pre-determined discount period;
   transmitting the first pricing information and the first delivery time to the multiple consumer ends;
   determining if the first pricing information and the first delivery time are acceptable according to a first confirmation message transmitted from the consumer end; and
   when the determined result is acceptable, generating the pre-ordered schedule information, transmitting an LPG fill message to a corresponding vehicle end, executing the planned delivery for scheduled order according to the pre-ordered schedule information, acquiring the transaction information of a previous purchase order for barreled LPG to generate the refund event information for LPG tare weight to complete the scheduled order mode, and recording the transaction information of currently purchased barreled LPG..

Given the foregoing barreled LPG distribution method, the vehicle dispatch device continuously receives the order messages transmitted from the consumer ends and the realtime schedule information transmitted from the vehicle ends to generate the pre-ordered schedule information, determines whether the instant order mode, the scheduled order mode or the self-pickup order mode is to be performed according to the received order messages, when the instant order mode is to be performed, acquires the best-matching vehicle information according to the realtime schedule information and transmits an instant delivery message to the vehicle ends to complete the instant order mode, when the scheduled order mode is to be performed, generates the pre-ordered schedule information according to a first discount condition, executes a planned delivery for scheduled order according to the pre-ordered schedule information, and generates refund event information for LPG tare weight to complete the scheduled order mode, and when the self-pickup order mode is to be performed, generates the pre-ordered schedule information according to a second discount condition, executes a planned delivery for self-pickup order according to the pre-ordered schedule information, transmits a self-pickup order message, generates the refund event information and records the transaction information including the unit, the purchase date and time, and the cylinder specifications of the currently purchased barreled LPG. By the self-pickup order mode, purchased barreled LPG is allowed to be picked up at non-fixed premises, such as on a moving route of a vehicle. In collaboration with incentive plans, consumers are motivated to order barreled LPG before the current barreled LPG runs out. As a result, delivery schedule of the barreled LPG can be conveniently arranged by the barreled LPG vendors and consumers' habit for replacing barreled LPG can be changed. Such diversified distribution mechanism meets demands for consumers to personally pick up and order the barreled LPG based on a scheduled and instant manner, thereby enhancing distribution efficiency of barreled LPG and consumers' interaction.

To achieve the foregoing objective, the barreled liquefied petroleum gas (LPG) distribution system includes multiple first electronic devices, multiple second electronic devices and a vehicle dispatch device.

Each first electronic device is communicatively connected to a network through a first communication protocol and transmits an order message.

Each second electronic device is communicatively connected to the network through a second communication protocol transmitting and receives realtime schedule information.

The vehicle dispatch device is communicatively connected to the multiple first electronic devices and the multiple second electronic devices through the network.

Each first electronic device is equipped at a consumer end, each second electronic device is equipped at a vehicle end, and the vehicle dispatch device receives the order messages from the multiple first electronic devices and the realtime schedule information from the multiple second electronic devices to generate the pre-ordered schedule information.

The vehicle dispatch device determines whether the instant order mode, the scheduled order mode or the self-pickup order mode is to be performed according to the received order messages, when the instant order mode is to be performed, acquires the best-matching vehicle information according to the realtime schedule information and transmits an instant delivery message to the second electronic devices for the vehicle dispatch device to record the transaction information including the unit price, the purchase date and time, and the cylinder specifications of the currently purchased barreled LPG to complete the instant order mode, when the scheduled order mode is to be performed, generates pre-ordered schedule information according to a first discount condition, executes a planned delivery for scheduled order according to the pre-ordered schedule information, acquires the transaction information including the unit price, the purchase date and time, and the cylinder specifications of the previous purchase order for barreled LPG, generates the refund event information for LPG tare weight to complete the scheduled order mode, and records the transaction information including the unit price, the purchase date and time, and the cylinder specifications of the currently purchased barreled LPG, and when the self-pickup order mode is to be performed, generates the pre-ordered schedule information according to the second discount condition, executes the planned delivery for self-pickup order according to the pre-ordered schedule information, transmits the self-pickup message to the corresponding first and second electronic devices to designate a location for delivery, acquires the transaction information including the unit price, the purchase date and time, and the cylinder specifications of the previous purchase order for barreled LPG, generates the refund event information, and records the transaction information including the unit, the purchase date and time, and the cylinder specifications of the currently purchased barreled LPG.

As can be seen from the foregoing structure of the barreled LPG distribution system, the multiple consumer ends utilize the respective first electronic device equipped therewith to issue the order messages, the multiple vehicle ends utilize the respective second electronic devices equipped therewith to transmit and receive the realtime schedule information, and the vehicle dispatch device is connected to the multiple first electronic devices and the multiple second electronic devices through a network to receive the order messages transmitted from the consumer ends through the respective first electronic devices and the realtime schedule information transmitted from the vehicle ends through the respective second electronic devices and generate the pre-ordered schedule information.

The vehicle dispatch device determines if the instant order mode, the scheduled order mode or the self-pickup order mode is to be performed according to the order messages. When the instant order mode is to be performed, the vehicle dispatch device transmits the instant delivery message to the second electronic device of one of the vehicle ends to complete the instant order mode. When the scheduled order mode is to be performed, the vehicle dispatch device generates pre-ordered schedule information according to a first discount condition, executes a planned delivery for scheduled order according to the pre-ordered schedule information, and generates refund event information for LPG tare weight. The incentive plan associated with the discount condition and the refund motivates consumers to place order for barreled LPG before original one runs out. When the self-pickup order mode is to be performed, the vehicle dispatch device sends a self-pickup message to each of the associating first electronic device and the associating second electronic device to complete the self-pickup order mode. With the self-pickup order mode, consumers are allowed to pick up the purchased barreled LPG at non-fixed premises, not only facilitating vendor's arrangement for delivery schedule and consumers' orders of barreled LPG capable of being picked up on a distribution route announced by the vendor, but also potentially changing consumers' habits having current barreled LPG replaced. In view of the foregoing diversified distribution mechanism in support of customers' needs of purchasing barreled LPG on the basis of self pickup, scheduled order or instant order, the barreled LPG distribution efficiency and consumers' interaction can be significantly enhanced.

Other objectives, advantages and novel features of the invention will become more apparent from the following detailed description when taken in conjunction with the accompanying drawings.

### IN THE DRAWINGS

Fig. 1 is a schematic diagram showing a system infrastructure of a barreled LPG distribution system in accordance with the present invention;
Fig. 2 is a flow diagram of a barreled LPG distribution method in accordance with the present invention;
Fig. 3 is a sequence diagram of an application implemented by the barreled LPG distribution method in Fig. 2; and
Fig. 4 is a schematic diagram showing a conventional LPG distribution means.

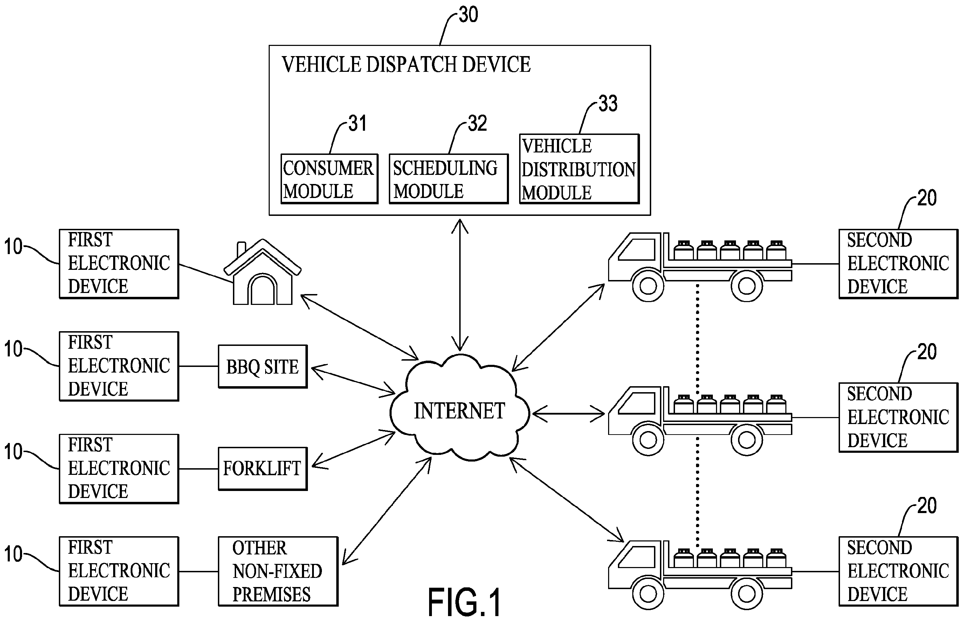

With reference to Fig. 1, a barreled liquefied petroleum gas (LPG) distribution system includes multiple first electronic devices 10, multiple second electronic devices 20 and a vehicle dispatch device 30. Each first electronic device 10 is built in with a first communication protocol and is communicatively connected to a network through the first communication protocol. Each second electronic device 20 is built in with a second communication protocol and is communicatively connected to the network through the second communication protocol. The vehicle dispatch device 30 is communicatively connected to the first electronic devices 10 and the second electronic devices 20 to exchange information.

In the present embodiment, each first electronic device 10 may be computer equipment, a mobile device or a smart phone, each second electronic device 20 may be computer equipment, a mobile device, a smart phone or a vehicular computer, and the vehicle dispatch device 30 may be a cloud server. Multiple consumer ends that may be located at home, a barbeque site, a forklift, and other non-fixed places can utilize the respective first electronic devices 10 to transmit order massages to the vehicle dispatch device 30. Multiple vehicle ends equipped with the respective second electronic devices 20 transmit and receive realtime schedule information, are used to carry and transport barreled LPG, and can transmit a delivery status to the vehicle dispatch device 30 through the respective second electronic devices 20.

The vehicle dispatch device 30 receives the order messages from the first electronic devices 10 and the realtime schedule information of the second electronic devices 20 to generate pre-ordered schedule information. In the present embodiment, the vehicle dispatch device 30 includes a consumer module 31, a scheduling module 32 and a vehicle distribution module 33. The consumer module 31 receives the order messages from the first electronic devices 10. The vehicle distribution module 33 receives the realtime schedule information from the second electronic devices 20. The scheduling module 32 generates the pre-ordered schedule information.

The scheduling module 32 of the vehicle dispatch device 30 determines if a instant order mode, a scheduled order mode or a self-pickup order mode is performed according to the order messages received by the consumer module 31.

When the scheduling module 32 determines that the instant order mode is to be performed, the vehicle distribution module 33 acquires best-matching vehicle information according to the realtime schedule information and transmits an instant delivery message to the second electronic device 20 corresponding to the best-matching vehicle information to complete the instant order mode and record transaction information of currently purchased barreled LPG including a unit price, purchase date and time, and cylinder specifications.

When determining that the scheduled order mode is to be performed, the scheduling module 32 generates pre-ordered schedule information according to a first discount condition, executes a planned delivery for scheduled order according to the pre-ordered schedule information, acquires the transaction information including the unit price, the purchase date and time, and the cylinder specifications of a previous purchase order for barreled LPG to generate refund event information for LPG tare weight and record the refund event information in the vehicle distribution module 33 in completion of the scheduled order mode, and records the transaction information of the currently purchased barreled LPG, including the unit price, the purchase date and time, and the cylinder specifications, in the refund event information.

When determining that the self-pickup order mode is to be performed, the scheduling module 32 generates the pre-ordered schedule information according to a second discount condition and executes a planned delivery for self-pickup order, transmits a self-pickup message to the first electronic device 10 and the second electronic device 20 corresponding to the pre-ordered schedule information, acquires the transaction information including the unit price, the purchase date and time, and the cylinder specifications of the previous purchase order for barreled LPG to generate another refund event information for LPG tare weight and record the refund event information in the vehicle distribution module 33 in completion of the self-pickup order mode, and records the transaction information of the currently purchased barreled LPG last time, including the unit price, the purchase date and time, and the cylinder specifications, in the refund event information. For example, customers can pre-order barreled LPG through a system established by LPG vendors according to schedule and pricing information configured by the LPG vendors, personally pick up purchased barreled LPG by the date and time and the location selected by the consumers, return unfinished LPG barrels, and carry back the purchased barreled LPG.

In the present embodiment, during the scheduled order mode, when purchased barreled LPG is exchanged at a customer's premise, the LPG barrel to be replaced is weighed first, and a price of residual LPG in the LPG barrel to be replaced is calculated according to the transaction information including the unit price, the purchase date and time, and the cylinder specifications of the previous purchase order for barreled LPG contained in the refund event information and is compensated by a refund process, such that customers suffer no loss from residual LPG left in the LPG barrel replaced by pre-ordered barreled LPG.

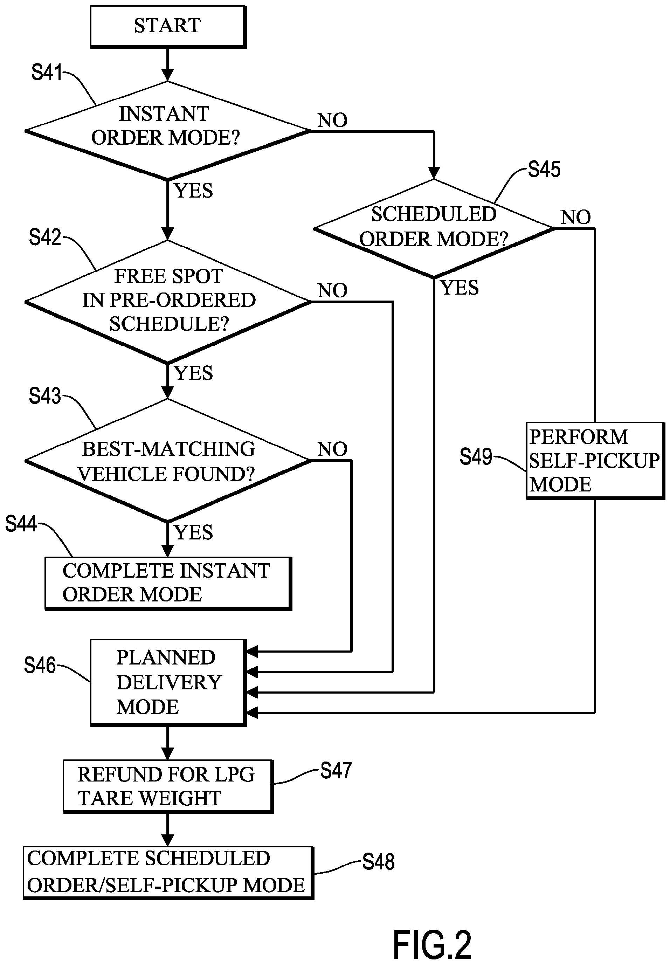

With reference to Fig. 2, a barreled LPG distribution method deduced from the foregoing embodiment of the barreled LPG system is performed by the vehicle dispatch device 30 that is communicatively connected to the multiple first electronic devices 10 at the consumer ends and the multiple second electronic devices 20 at the vehicle ends through a network, and includes the following steps.

Step S41: Receive an order message from one of the consumer ends and realtime schedule information from the vehicle ends to generate pre-ordered schedule information and determine if an instant order mode is to be performed according to the order message. When the determined result is positive, perform step S42. Otherwise, perform step S45.

Step S42: Perform the instant order mode and determine if a free spot is available in the pre-ordered schedule information. When the determined result is positive, perform step S43. Otherwise, perform step S46.

Step S43: Determine if there is a vehicle end best-matching a condition according to the realtime schedule information from all the vehicle ends. When the determined result is positive, perform step S44. Otherwise, perform step S46.

Step S44: Acquire best-matching vehicle information of the best-matching vehicle end, transmit an instant delivery message to the best-matching vehicle end to complete the instant order mode, and record transaction information of currently purchase barreled LPG, including a unit price, purchase date and time, and cylinder specifications at the same time.

Step S45: Determine if a scheduled order mode is to be performed according to the order message. When the determined result is positive, perform step S46. Otherwise, perform step S49.

Step S46: Generate pre-ordered schedule information according to a first discount condition, executes a planned delivery for scheduled order according to the pre-ordered schedule information, and go to step S47.

Step S47: Acquire the transaction information including the unit price, the purchase date and time, and the cylinder specifications of a previous purchase order for barreled LPG to generate refund event information for LPG tare weight, and go to step S48.

Step S48: Complete the scheduled order mode/a self-pickup order mode.

Step S49: Perform the self-pickup order mode to transmit a self-pickup message and go to step S46.

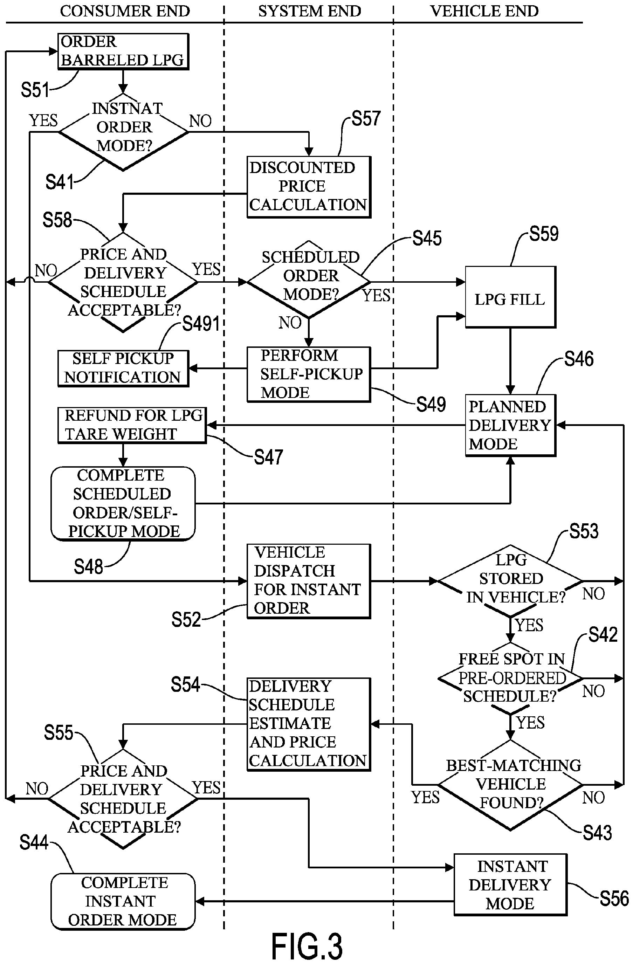

With reference to Fig. 3, an application implemented by the barreled LPG distribution method in Fig. 2 is depicted as follows. The vehicle dispatch device 30 provides an operation platform, such as a web page, through a network, allows the multiple consumer ends to log in the operation platform through the respective first electronic devices 10, and also allows the multiple vehicle ends to log in the operation platform through the respective second electronic devices 20. The application in Fig. 3 is implemented by using the vehicle dispatch device 30 to perform the barreled LPG distribution method. Specifically, the consumer module 31 of the vehicle dispatch device 30 receives the order messages of the multiple first electronic devices 10 placed through the operation platform and processes information generated by the consumer ends on the operation platform. The vehicle distribution module 33 receives the realtime schedule information issued by the second electronic devices 20 through the operation platform and processes information transceived by the vehicle ends through the operation platform. The scheduling module 32 of the vehicle dispatch device 30 then generates the pre-ordered schedule information and takes charge of computation of the vehicle dispatch device 30. To reflect the application in a detailed fashion, besides that steps S41 to S49 are remained in a similar fashion, the barreled LPG method is elaborated and further includes the following steps.

Step S51: One of the consumer ends logs in the operation platform to purchase barreled LPG through a corresponding first electronic devices 10, and the customer module 31 generates the order message. After step S51 is performed, step S41 is performed. In step S41, the vehicle distribution module 33 determines if the instant order mode is to be performed. When the determined result in step S41 is positive, step S52 is performed. Otherwise, step S57 is performed.

Step S52: The scheduling module 32 dispatches a vehicle according to the instant order mode and then step S53 is performed.

Step S53: The vehicle distribution module 33 determines if the vehicle has enough LPG stored therein according to the realtime schedule information returned from the vehicle. When the determined result in step S53 is positive, step S42 is performed. Otherwise, step S46 is performed. In step S42, the vehicle distribution module 33 determines if a free spot is available in the pre-ordered schedule information. When there is a free spot, step S43 is performed. Otherwise, step S46 is performed. In step S43, The vehicle distribution module 33 determines if there is a vehicle end best-matching a condition according to the realtime schedule information from all the vehicle ends. When there is a best-matching vehicle end, step S54 is performed. Otherwise, step S46 is performed.

Step S54: The vehicle distribution module 33 acquires best-matching vehicle information of the best-matching vehicle end, and the scheduling module 32 assesses second pricing information and a second delivery time according to the best-matching vehicle information, and transmits the second pricing information and the second delivery time to the consumer end.

Step S55: The consumer module 31 determines if the second pricing information and the second delivery time are acceptable according to a second confirmation message transmitted from the consumer end through a corresponding first electronic device 10. When the second pricing information and the second delivery time are acceptable, step S56 is performed. Otherwise, step S51 is performed.

Step S56: The vehicle distribution module 33 executes a scheduled delivery for instant order by transmitting the instant delivery message to the best-matching vehicle end through the operation platform to complete the instant order mode in step S44.

Step S57: The scheduling module 32 generates the pre-ordered schedule information based on a pre-determined discount period. In the present embodiment, the first discount condition indicates pricing information over a pre-determined discount period. The scheduling module 32 then transmits first pricing information and a first delivery time to the consumer end.

Step S58: The consumer module 31 determines if the first pricing information and the first delivery time are acceptable according to a first confirmation message sent from the first electronic device 10 of one of the consumer ends. When the determined result is acceptable, step S45 is performed. Otherwise, step S51 is performed. When the scheduled order mode is to be performed in step S45, step S59 is performed. Otherwise, step S49 associated with the self-pickup order mode is performed, the scheduling module 32 generates the pre-ordered schedule information according to a second discount condition and transmits a self-pickup message to both the consumer end and one of the vehicle ends in step S491 and the vehicle end generates an LPG fill message according to the self-pickup message in step S59.

Step S59: The vehicle distribution module 33 transmits the LPG fill message to the vehicle end and sequentially performs steps S46 to S48.

In sum, the present invention can be applied to multiple consumer ends and multiple vehicle ends. The first electronic devices 10 and the second electronic devices 20 respectively at the consumer ends and the vehicle ends are used to transmit the order messages and receive the realtime schedule information. The vehicle dispatch device 30 is linked to the first electronic devices 10 and the second electronic devices 20 through a network to generate the pre-ordered schedule information. The vehicle dispatch device 30 determines if the instant order mode, the scheduled order mode or the self-pickup order mode is to be performed according to each order message. When the instant order mode is to be performed, the best-matching vehicle information is acquired according to the realtime schedule information and the instant delivery message is transmitted to the second electronic device 20 of the corresponding vehicle end to complete the instant order mode. When the self-pickup order mode is to be performed, the self-pickup message is transmitted to the first electronic device 10 and the corresponding second electronic device 20. When the scheduled order mode is to be performed, the pre-ordered schedule information is generated based on a pre-determined discount period and the scheduled order mode is performed according to the pre-ordered schedule information to generate the refund event information for LPG tare weight and record the refund event information in the vehicle dispatch device 30. In case of refund request for residual LPG from consumers, consumers can utilize the first electronic devices 10 to confirm through the operation platform to complete the scheduled order mode. The present invention provides the self-pickup order mode to personally deliver barreled LPG to consumers at non-fixed premises. Given different discount conditions, consumers are more motivated to get barreled LPG replaced before it actually runs out. All these measures not only facilitate barreled LPG vendors to easily arrange delivery schedule but also change customers' habits with replacement of barreled LPG. Additionally, the refund event information is generated whenever consumers call for replacement of barreled LPG through the scheduled order mode or the self-pickup order mode. The refund for residual LPG in the barrel to be replaced is calculated by weighing the barrel to be replaced and referring to the unit price, the purchase date and time, and the cylinder specifications of the previous purchase order for barreled LPG in the refund event information when the consumer is paying the new barrel delivered to the consumer's premise. By virtue of the foregoing diversified delivery mechanisms for consumers to fulfill the needs for purchase of barreled LPG based on the self-pickup order mode, the scheduled order mode and the instant order mode, higher distribution efficiency of barreled LPG and interaction with consumers can be realized accordingly.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A barreled liquefied petroleum gas (LPG) distribution method performed by a vehicle dispatch device (30) communicatively connected to multiple consumer ends and multiple vehicle ends through a network, **characterized in that** the barreled LPG distribution method comprising:
receiving an order message from one of the multiple consumer ends and realtime schedule information from the multiple vehicle ends to generate pre-ordered schedule information;
determining if an instant order mode, a scheduled order mode or a self-pickup order mode associated with purchase of barreled LPG is to be performed;
when the instant order mode is to be performed, acquiring best-matching vehicle information according to the realtime schedule information, transmitting an instant order delivery message, and recording transaction information of currently purchased barreled LPG including unit price, purchase date and time, and cylinder specifications to complete the instant order mode;
when the scheduled order mode is to be performed, generating the pre-ordered schedule information according to a first discount condition, executing a planned delivery for scheduled order according to the pre-ordered schedule information, generating refund event information for LPG tare weight, and recording the transaction information of currently purchased barreled LPG;
when the self-pickup order mode is to be performed, generating the pre-ordered schedule information according to a second discount condition, executing a planned delivery for self-pickup order according to the pre-ordered schedule information, transmitting a self-pickup order message, generating the refund event information for LPG tare weight, and recording the transaction information of currently purchased barreled LPG;
wherein the step of performing the scheduled order mode comprises:
generating first pricing information and a first delivery time based on a pre-determined discount period;
transmitting the first pricing information and the first delivery time to the multiple consumer ends;
determining if the first pricing information and the first delivery time are acceptable according to a first confirmation message transmitted from the consumer end; and
when the determined result is acceptable, generating the pre-ordered schedule information, transmitting an "LPG fill" message to a corresponding vehicle end, executing a planned delivery for scheduled order according to the pre-ordered schedule information, acquiring the transaction information of a previous purchase order for barreled LPG to generate the refund event information for LPG tare weight to complete the scheduled order mode, and recording the transaction information of currently purchased barreled LPG.

2. The method as claimed in claim 1, wherein the step of performing the instant order mode comprises:
determining if a free spot is available in the pre-ordered schedule information;
when determining that a free spot is available, determining if there is a vehicle end best-matching a condition according to the realtime schedule information from all the vehicle ends; and
when determining that there is a vehicle best-matching the condition, acquiring the best-matching vehicle information of the best-matching vehicle end, transmitting an instant order delivery message to the best-matching vehicle end to complete the instant order mode, and recording the transaction information of currently purchased barreled LPG

3. The method as claimed in claim 2, wherein when determining that no free spot is available, executing a planned delivery for current order according to the pre-ordered schedule information; and when determining that there is no vehicle best-matching the condition, executing the planned delivery for current order according to the realtime schedule information.

4. The method as claimed in claim 2 or 3, wherein
when the instant order mode is to be performed, determining if the best-matching vehicle end has LPG stored therein according to the realtime schedule information returned from the best-matching vehicle end;
when determining that the best-matching vehicle has LPG stored therein, determining if a free spot is available according to the pre-ordered schedule information.

5. The method as claimed in claim 4, wherein when determining that the best-matching vehicle end has no LPG stored therein, executing the planned delivery for current order according to the realtime schedule information.

6. The method as claim in claim 1, wherein when the instant order mode is to be performed, after acquiring the best-matching vehicle information according to the realtime schedule information, generating second pricing information and a second delivery time according to the best-matching vehicle information, transmitting the second pricing information and the second delivery time to the consumer end, determining if the second pricing information and the second delivery time are acceptable according to a second confirmation message transmitted from the consumer end, and when the second pricing information and the second delivery time are acceptable, executing an instant order delivery and transmitting the instant order delivery message to the best-matching vehicle end to complete the instant order mode.

7. the method as claimed in claim 1, wherein when the self-pickup order mode is to be performed, generating the pre-ordered schedule information according to the second discount condition, transmitting the self-pickup order message to both the consumer end and the vehicle ends, transmitting an "LPG fill" message to the vehicle end according to the self-pickup order message, executing the planned delivery for self-pickup order according to the pre-ordered schedule information, generating the refund event information, recording the refund event information in the vehicle dispatch device (30) to complete the self-pickup order mode, and recording the transaction information of currently purchased barreled LPG.

8. A barreled liquefied petroleum gas (LPG) distribution system, comprising:
multiple first electronic devices (10), each first electronic device (10) communicatively connected to a network through a first communication protocol and transmitting an order message;
multiple second electronic devices (20), each second electronic device (20) communicatively connected to the network through a second communication protocol transmitting and receiving realtime schedule information; and
a vehicle dispatch device (30) communicatively connected to the multiple first electronic devices (10) and the multiple second electronic devices (20) through the network;
wherein each first electronic device (10) is equipped at a consumer end, each second electronic device (20) is equipped at a vehicle end, and the vehicle dispatch device (30) performs the barreled LPG distribution method as claimed in any one of claims 1 to 7.

9. The system as claimed in claim 8, wherein the vehicle dispatch device (30) comprises:
a consumer module (31) receiving the order messages from the multiple first electronic devices (10) and processing information generated by the consumer ends;
a scheduling module (32) generating the pre-ordered schedule information and taking charge of computation of the vehicle dispatch device (30); and
a vehicle distribution module (33) receiving the realtime schedule information transmitted from the multiple second electronic devices (20) and processing information transceived by the multiple vehicle ends.
